# EUROPÄISCHE PATENTSCHRIFT

(11) **EP 2 221 507 B1**
(45) Veröffentlichungstag und Bekanntmachung des Hinweises auf die Patenterteilung: **28.11.2012**
(21) Anmeldenummer: 10153871.8
(22) Anmeldetag: 17.02.2010
(51) Int. Cl.: F16H 55/17, F16H 55/38

(54) **Spezielle Gestaltung einer Zahnriemenscheibe für Zugmitteltriebe**
Special design of a toothed belt pulley for belt drive
Forme spéciale d'une poulie à dent pour entraînements de moyens de traction

(30) Priorität: 19.02.2009 DE 102009009632
(43) Veröffentlichungstag der Anmeldung: 25.08.2010
(73) Patentinhaber: Schaeffler Technologies AG & Co. KG, 91074 Herzogenaurach (DE)
(72) Erfinder: Bogner, Michael, 90542 Eckental (DE); Schmidl, Matthias, 90542 Eckental (DE)

(56) Entgegenhaltungen:
- GB-A- 2 116 289
- JP-A- 5 106 708
- JP-A- 7 259 964
- JP-A- 10 318 353
- JP-A- 11 051 158
- JP-A- 11 311 304
- JP-A- 60 157 551
- JP-A- 2004 257 437
- JP-U- 3 017 360
- JP-U- 62 075 253
- JP-U- 62 087 251

## Beschreibung

Die Erfindung betrifft ein Zahnriemenrad oder eine Zahnriemenscheibe für einen Zahnriementrieb, gemäß den oberbegriffsbildenden Merkmalen von dem Patentanspruch 1.

### Hintergrund der Erfindung

Zahnriemenräder oder Zahnriemenscheiben werden in unterschiedlichen Ausführungsformen in als Zahnriementrieb ausgebildeten Zugmitteltrieben eingesetzt. Diese Bauteile dienen zur Übertragung von Antriebsmomenten und/oder zur Umlenkung des als Zahnriemen ausgebildeten Zugmittels.

Bei einem Zahnriementrieb kommt es zu einem Formschluss zwischen dem Zahnriemenrad und dem Zahnriemen. Für einen teilweise in einem Ölbad umlaufenden Zahnriementrieb besteht die Gefahr eines hydrodynamischen Aufschwimmens des Zahnriemens. Dabei sammelt sich Öl in der Verzahnung, wodurch sich im Extremfall ein sogenannter Zahnsprung einstellt, der bei einem als Steuertrieb bezeichneten Nockenwellenantrieb der Brennkraftmaschine zumindest zu einem Timingfehler aufgrund geänderter Steuerzeiten führt, der verschlechterte Abgaswerte der Brennkraftmaschine auslöst. Aufgrund einer veränderten Steuerzeit kann es bei hoch verdichteten Brennkraftmaschinen weiterhin es zu einem Kontakt zwischen dem Kolben und den Gaswechselventilen kommen, mit der Folge eines kapitalen Motorschadens. Daher muss dieser Effekt, ein Zahnsprung im Zahnriementrieb unbedingt vermieden werden. Zudem besteht bei einem vollständigen Aufschwimmen des Riemens eine erhöhte Gefahr des Abspringens oder Ablaufens des Riemens von dem treibenden oder getriebenen Zahnriemenrad.

Für Zugmitteltriebe mit Keilrippenriemen ist zur Vermeidung eines nachteiligen Aufschwimmens beispielsweise aus der JP 2002 206 624 A bekannt, eine Keilrippenriemenscheibe mit V-förmigen Vertiefungen oder Rillen auszubilden. Der weitestgehend korrespondierend gestaltete Riemen weist dazu trapezförmige Keilrippen auf, die formschlüssig in die Vertiefungen der Riemenscheibe eingreifen, wobei sich gleichzeitig ein Hohlraum zwischen dem Riemen und der Riemenscheibe bildet. Zur Drainage dieses sich einstellenden Hohlraumes weist die Riemenscheibe zumindest eine Bohrung auf, über die ein beispielsweise in dem Hohlraum befindliches Spritzwasser abgeleitet werden kann. Zur effektiven Ableitung des Wassers bedarf es einer Vielzahl über den Umfang verteilter Bohrungen, die neben einem erhöhten Mehraufwand für die mechanische Bearbeitung gleichzeitig zu einer Schwächung der Festigkeit der Riemenscheibe führen.

Die US 1,792,921 offenbart eine Riemenscheibe, welche mehrere parallel verlaufende Keilriemen aufnehmen kann. Die Flanken der Keilriemen oder der Vertiefungen der Riemenscheibe weisen periodische und symmetrische Verjüngungen im Bereich der V-förmigen Flächen der Riemenscheibe auf. Hierdurch entstehen im Bereich der Umschlingungsfläche Kanäle, durch welche zwischen den Riemen und der Riemenscheibe befindliches Wasser senkrecht zur Umfangsfläche nach außen austreten kann. Bei dieser Konstruktion ist die Berührfläche zwischen den Riemenflanken und der Riemenscheibe erheblich verringert. Dies führt zu einer höheren Belastung und damit erhöhtem Verschleiß im Bereich der Berührfläche bzw. Kontaktzone. Zudem besteht die Gefahr, dass sich im Falle eines kurzzeitigen Durchrutschens zwischen Riemen und Riemenscheibe durch die Relativbewegung ein Flüssigkeitskeil bildet, welcher die Reibung zwischen Riemen und Riemenscheibe nochmals stark verringert.

Ein Zahnriemenrad der eingangs genannten Art ist aus der gattungsgemaßen JP 62-087251 U, der JP 10-318353 A und der JP 60-157551 A bekannt.

### Aufgabe der Erfindung

Der Erfindung liegt die Aufgabe zugrunde, für einen zumindest bereichsweise in einem Ölbad umlaufenden Zahnriementrieb Maßnahmen zu schaffen, die ein hydrodynamisches Aufschwimmen des Riemens unterbinden

### Zusammenfassung der Erfindung

Zur Lösung der Aufgabe ist erfindungsgemäß vorgesehen, dass der Zahnriemen in einen als ein Profil gestalteten Laufmantel des Zahnriemenrades eingreift. Als Maßnahme um eine wirksame Ableitung einer Flüssigkeit oder eines Gases zu gewährleisten, ist in das Zahnprofil des Zahnriemenrades eine zumindest teilweise umlaufende, jeden Zahn teilende Rille oder Ringnut eingebracht. Ergänzend dazu schließt die Erfindung zumindest zwischen einzelnen Zähnen im Bereich des Zahnfußes eine Querrille ein. Dabei ist ein Radius, ein Abstandsmaß zwischen einer Zahnriemenradmitte und der vorzugsweise mittig angeordneten Ringnut kleiner ausgelegt als ein entsprechender Radius der Querrillen. Diese Ausgestaltung bewirkt eine optimale Ölableitung aus dem Kontaktbereich zwischen Riemen und Zahnriemenrad.

Eine bevorzugte Ausführung der Erfindung umfasst ein Zahnriemenrad mit einer das Riemenrad vollständig umschließenden Ringnut sowie mit radialen Querrillen, die zwischen allen Zähnen vorgesehen sind. Die erfindungsgemäße Ausgestaltung bildet gezielte Freiräume im Kontaktbereich zwischen dem Zahnriemen und dem Zahnriemenrad, wodurch das in den Kontaktbereich eintretende Öl direkt weitergeleitet wird, ohne Gefahr eines Aufschwimmens des Riemens auf einem Flüssigkeitsfilm. Zur Darstellung der Querrillen wird der Zahngrund im Vergleich zu bisherigen Zahnriemenrädern tiefer ausgeführt. Damit kann das über den Riemen in den Kontaktbereich eingeschleppte beziehungsweise eintretende Öl in den Zahngrund verdrängt werden und von dort seitlich abfließen. Ein zwischen dem Zahnriemen und dem Zahnriemenrad befindliches Öl wird dabei in die zwischen dem Zahnriemen und dem Zahnriemenrad vorgesehene Ringnut oder Querrille geleitet. Die zuvor in diesen Vertiefungen vorhandene Luft wird komprimiert und verdrängt und ungehindert abgeleitet, wodurch ein geräuschoptimierter Zahnriementrieb realisiert werden kann. Falls diese Vertiefungen, die Ringnut und/oder die Querrille bereichsweise mit Öl gefüllt sind, wird dieses durch das nachströmende Öl weitergeleitet.

Das erfindungsgemäße Zahnriemenrad kann allen Komponenten eines Zugmitteltriebs zugeordnet werden. Beispielsweise eignet sich das Zahnriemenrad zur Anwendung eines treibenden oder angetriebenen Zahnriemenrades. Unter treibende oder getriebene Zahnriemenräder werden im Zusammenhang mit dieser Erfindung auch Andrückrollen, Umlenkrollen oder Spannrollen für Zahnriemen verstanden: Bevorzugt wird das erfindungsgemäße Zahnriemenrad, das gezielte Maßnahmen aufweist, um ein Zahnriemen-Aufschwimmen zu unterbinden für Zahnriementriebe von Fahrzeug-Brennkraftmaschinen eingesetzt.

Die Ringnut bildet bevorzugt ein V-förmiges Querschnittsprofil, wodurch das im Bereich des Kontaktbereichs mit dem Zahnriemen befindliche Öl beschleunigt in die Ringnut eintreten und abgeführt werden kann. Diesen Effekt unterstützend weist die Ringnut im Bereich des Nutgrundes umfangsverteilt radial oder geneigt verlaufende Ausnehmungen oder Kanäle auf, die eine Verbindung zwischen der Ringnut und beispielsweise einer zylindrischen Ausnehmung oder Freistellung des Zahnriemenrades herstellen.

Aus Festigkeitsgründen ist die Ringnut in dem Nutgrund gerundet ausgeführt. Als Maßnahme zur Vermeidung eines Zahnriemenverschleißes weist die Ringnut weiterhin beidseitig gerundete Übergänge zu dem Zahnprofil auf. Zur Vermeidung einer nachteiligen Geräuschentwicklung beim Eintritt des Zahnriemens in den Kontaktbereich, in das Zahnprofil des Zahnriemenrades bietet es sich an, die umlaufende Ringnut so in das Zahnriemenrad einzubringen, dass sich kein rotationsymmetrisches Profil einstellt.

Für die Ausgestaltung der Querrillen kann eine gleichbleibende Tiefe über die gesamte Länge vorgesehen werden. Eine alternative Ausbildung sieht vor, dass die Vertiefung der Querrillen zu den Randseiten bzw. zu den Stirnflächen des Zahnriemenrades kontinuierlich zunimmt. Diese Ausgestaltung ermöglicht eine strömungsoptimale Form der Querrillen. Diese schrägverlaufende Vertiefung kann vorteilhaft als eine überproportionale Entformungsschräge ausgeführt werden.

Eine andere vorteilhafte Weiterbildung der Erfindung sieht vor, dass der zur Ableitung einer Flüssigkeit zur Verfügung stehende Kanalquerschnitt in der treibenden oder getriebenen Antriebsriemenscheibe nicht konstant ist, sondern sich in der Fließrichtung der abgeleiteten Flüssigkeit vergrößert. Hierbei kann berücksichtigt werden, dass die Menge des zu transportierenden Öls entlang der Strecke einer Ringnut und Querrille tendenziell zunimmt. Durch eine Erweiterung von Querschnitten dieser Ausnehmungen kann zudem einer unerwünschten Erhöhung der Strömungsgeschwindigkeit entgegengewirkt werden.

Die Erfindung schließt weiterhin eine umlaufende Nut in dem Zahnprofil des Zahnriemens ein, wobei deren Lage mit der Ringnut der Zahnriemenscheibe korrespondiert oder davon abweicht. Damit stellt sich vorteilhaft ein größerer Querschnitt ein, über den das in den Kontaktbereich zwischen dem Zahnriemen und dem Zahnriemenrad eintretende Öl abgeführt werden kann.

In einer weiteren Ausgestaltung der Erfindung ist vorgesehen, dass das Zahnriemenrad eine Ringnut in Form eines nicht rotationssymmetrischen Reifenprofils besitzt, welches ganz oder zumindest teilweise nicht zur Aufnahme korrespondierender Konturen eines zugeordneten Riemens vorgesehen ist und welche zur Ableitung von Flüssigkeit zwischen Riemen und treibendem oder getriebenem Zahnriemenrad dienen.

### Kurze Beschreibung der Zeichnungen

Die Erfindung wird im Folgenden anhand der beiliegenden Zeichnungen näher erläutert. Es zeigen:
- Fig. 1: in einer Perspektive ein erfindungsgemäß gestaltetes Zahnriemenrad mit einer umschließenden Ringnut;
- Fig. 2: einen Abschnitt von der Innenseite eines Zahnriemens;
- Fig. 3: ein erfindungsgemäßes Zahnriemenrad, das im Zahnprofil Querrillen einschließt;
- Fig. 4: das Zahnriemenrad in einer Schnittansicht, die eine Lage der Ringnut und der Querrille verdeutlicht.

### Detaillierte Beschreibung der Zeichnungen

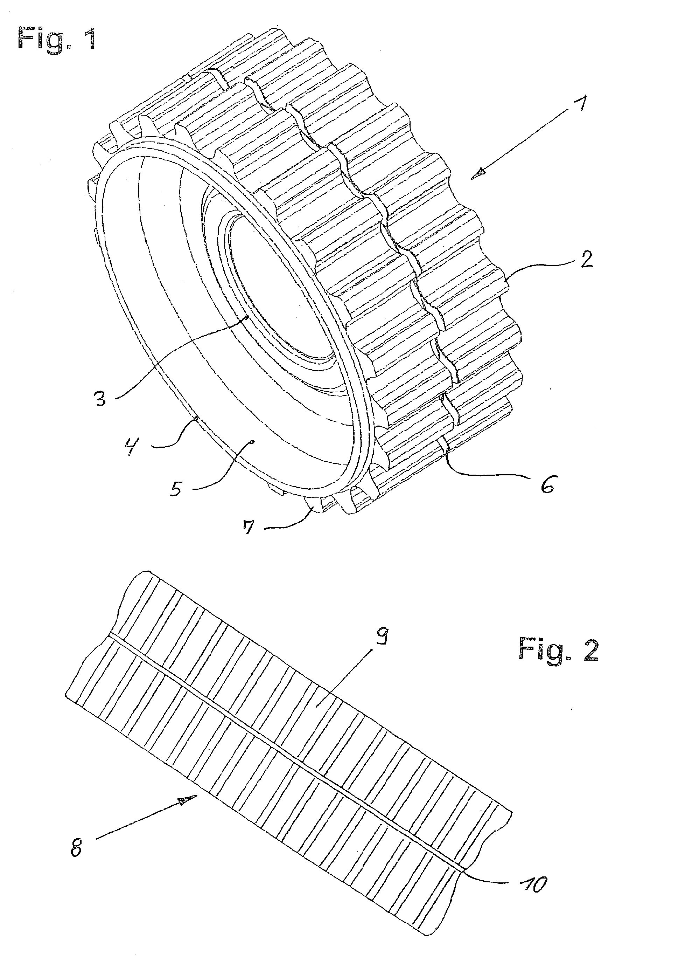

Das in Fig. 1 in einer Perspektive gezeigte treibende oder getriebene Zahnriemenrad 1 bildet ein zylindrisches Gehäuse, welches außenseitig von einem Zahnprofil 2 umschlossen ist. Eine Befestigung des Zahnriemenrades 1 erfolgt über eine als Stegwand ausgebildete Nabe 2. Durch diesen Aufbau stellt sich zwischen der Nabe 2 und einer Stirnseite 4 des Zahnriemenrades 1 eine zylindrische zentrisch positionierte Freistellung 5 ein. In das Zahnprofil 2 ist eine umlaufende Ringnut 6 eingebracht, durch die alle Zähne 7 des Zahnprofils 2 jeweils geteilt werden.

Die Figur 2 zeigt einen Ausschnitt von einer Innenseite eines Zahnriemens 8. Ein Zahnprofil 9 des Zahnriemens 8 weist mittig eine umlaufende Nut 10 auf, die mit einer Lage der Ringnut 6 des Zahnriemenrades 1 korrespondiert. Im Betriebszustand greift das Zahnprofil 9 des Zahnriemens 8 formschlüssig in die Zahnprofile der einzelnen Zahnriemenräder des Zugmitteltriebs ein.

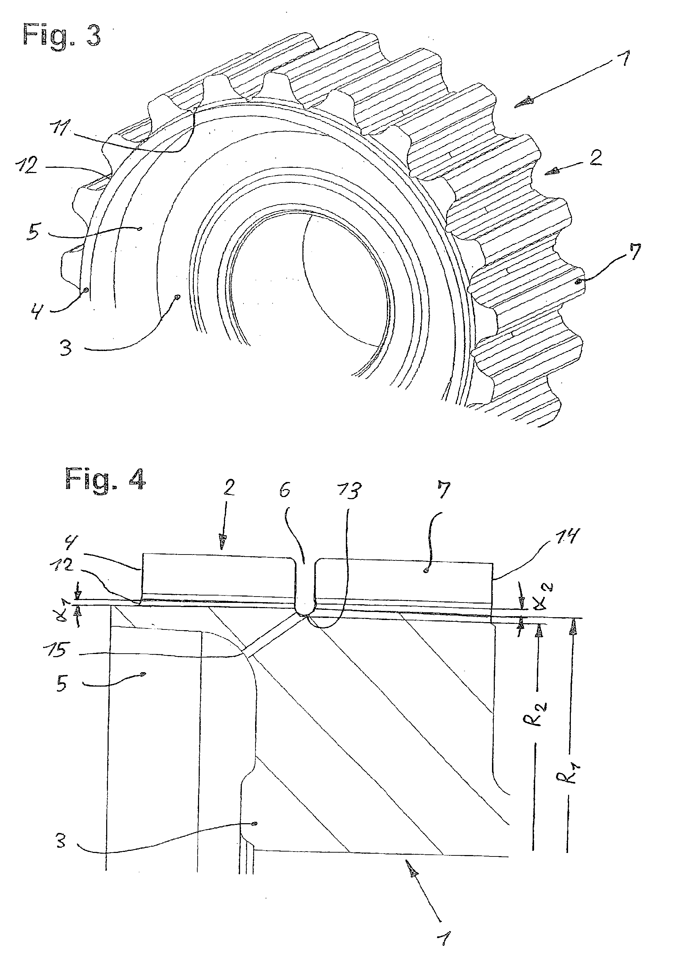

Das Zahnprofil 2 des Zahnriemenrades 1 umfasst gemäß Figur 3 im Bereich eines Zahnfußes 12 zwischen zwei Zähnen 7 eingebrachte Querrillen 11. Alternativ oder in Kombination mit der in Figur 1 dargestellten Ringnut 6 haben die Querrillen 11 die Aufgabe, in einen Kontaktbereich zwischen dem Zahnriemen 8 und dem Zahnriemenrad 1 eintretendes Öl aufzunehmen, um ein nachteiliges hydrodynamisches Aufschwimmen des Zahnriemens 8 zu unterbinden.

Die Figur 4 zeigt in einer Schnittebene durch eine Querrille 11 des Zahnriemenrades 1 in einem vergrößerten Maßstab die Lage und geometrische Gestaltung der Ringnut 6 und der Querrille 11. Die mittig in dem Zahn 7 des Zahnprofils 2 eingebrachte Ringnut 6 bildet in einem Nutgrund 13 einen durch einen Radius gebildeten Übergang. Weiterhin weist die Ringnut 6 in einem Öffnungsbereich gerundete Übergänge zu einer Außenkontur des Zahns 7 auf. Erfindungswesentlich ist in dem Bereich des Zahnfußes 12 die Querrille 11 vorgesehen, die zur Ölableitung vorgesehen ist, das in die Kontaktzone zwischen dem Zahnriemen 8 und dem Zahnriemenrad 1 eintritt. Von der mittig positionierten Ringnut 6 ausgehend, vergrößert sich die Tiefe der Querrille 11 zu den Stirnseiten 4, 14 kontinuierlich, verdeutlicht durch die Winkel α₁ bzw. α₂. Ein sich einstellender Radius R₁ zwischen dem Grund der Querrille 11 und einer Mitte des Zahnriemenrades 1 übertrifft einen Radius R₂, der sich zwischen dem Grund der Ringnut 6 und der Zahnriemenradmitte einstellt. Als zusätzliche Maßnahme zur Ableitung des Öls aus der Ringnut 6 weist diese vorzugsweise mehrere umfangsverteilt angeordnete Kanäle 15 auf, die eine Verbindung zu der zentrischen Freistellung 5 des Zahnriemenrades 1 herstellen.

### Bezugszeichenliste

- 1: Zahnriemenrad
- 2: Zahnprofil
- 3: Nabe
- 4: Stirnseite
- 5: Freistellung
- 6: Ringnut
- 7: Zahn
- 8: Zahnriemen
- 9: Zahnprofil
- 10: Nut
- 11: Querrillen
- 12: Zahnfuß
- 13: Nutgrund
- 14: Stirnseite
- 15: Kanal

## Patentansprüche

1. Zahnriemenrad für einen Zugmitteltrieb, bei dem ein Zahnriemen (8) formschlüssig in Zahnprofile (2) von treibenden oder angetriebenen Zahnriemenrädern (1) eingreift, wobei ein Zahnprofil (2) Maßnahmen zur Aufnahme und/oder zur Weiterleitung von zwischen dem Zahnriemenrad (1) und dem Zahnriemen (8) eintretender Flüssigkeit oder eintretendem Gas vorsieht und das Zahnprofil (2) zumindest eine weitestgehend umlaufende, jeden Zahn (7) teilende Ringnut (6) einschließt, **dadurch gekennzeichnet, dass** das Zahnriemenrad zumindest eine in einem Bereich des Zahnfußes (12) zwischen zwei Zähnen (7) eingebrachte Querrille (11) einschließt und der Radius (R₂) von der Zahnriemenradmitte zum Grund der Ringnut (6) kleiner als der Radius (R₁) von der Zahnriemenradmitte zum Grund der Querrille (11) ist.

## Claims

1. Toothed belt pulley for a traction mechanism, wherein a toothed belt (8) engages with a form fit into toothed profiles (2) of driving or driven toothed belt pulleys (1), wherein a toothed profile (2) provides measures for receiving and/or for redirecting liquid or gas entering between the toothed belt pulley (1) and the toothed belt (8), and the toothed profile (2) encloses at least one mostly circumferential annular groove (6) which divides each tooth (7), **characterized in that** the toothed belt pulley encloses at least one transverse groove (11) made between two teeth (7) in a region of the tooth root (12), and the radius (R₂) from the centre of the toothed belt pulley to the bottom of the annular groove (6) is smaller than the radius (R₁) from the centre of the toothed belt pulley to the bottom of the transverse groove (11).

## Revendications

1. Roue à courroie dentée pour un entraînement à moyen de traction, dans laquelle une courroie dentée (8) vient en prise par engagement par correspondance géométrique dans des profils de dents (2) de roues à courroie dentée (1) menantes ou menées, un profil de dent (2) disposant de mesures pour recevoir et/ou transmettre un liquide ou un gaz entrant entre la roue à courroie dentée (1) et la courroie dentée (8) et le profil de dent (2) incluant au moins une rainure annulaire (6) essentiellement périphérique, divisant chaque dent (7), **caractérisée en ce que** la roue à courroie dentée inclut au moins une gorge transversale (11) pratiquée dans une région de la base de dent (12) entre deux dents (7) et le rayon (R₂) du milieu de la roue à courroie dentée à la base de rainure annulaire (6) est inférieur au rayon (R₁) du milieu de la roue à courroie dentée à la base de la gorge transversale (11).
